# EUROPEAN PATENT SPECIFICATION

(11) **EP 0 629 115 B1**
(45) Date of publication and mention of the grant of the patent: **16.10.1996**
(21) Application number: 93905528.1
(22) Date of filing: 05.03.1993
(51) Int. Cl.: A21D 2/22, A21D 8/02, A21C 1/00

(54) **DOUGH MIXING**
MISCHEN VON TEIG
MELANGE D'UNE PATE

(30) Priority: 05.03.1992 GB 9204883
(43) Date of publication of application: 21.12.1994
(73) Proprietor: APV CORPORATION LIMITED, Peterborough PE4 7AP (GB)
(72) Inventor: COLLINS, Thomas Hylton, Buckinghamshire HP7 9QL (GB)
(74) Representative: Mohun, Stephen John
(86) International application number: GB9300471
(87) International publication number: WO9317561

(56) References cited:
- EP-A- 0 246 768
- GB-A- 931 637
- GB-A- 1 044 616
- GB-A- 1 110 407
- GB-A- 2 056 293
- US-A- 4 465 700

## Description

This invention relates to dough mixing, and in particular to improvements in dough mixing to maximise the utilisation of ascorbic acid as a bread improver.

The baking industry makes use of improvers for the control of loaf quality and to enable better production of bread using fast processes in modern highly mechanised plants. The use of improvers is not exclusive to large scale production, though the subject of this invention applies more to large scale than any other.

On 1st April 1990 permission to continue to use the improver potassium bromate was withdrawn by the U.K. Government. A similar action has either already taken place in other developed countries or could do so in the foreseeable future.

Bromate was a very versatile improver, acting under all the conditions commonly in use for breadmaking. In particular, it did not require to be converted into another compound to work as an improver, it was unaffected by the atmosphere in the mixing machine bowl and there was synergism between it and ascorbic acid, the other most widely used improver.

The U.K. baking industry now has a choice of only three oxidising improvers, ascorbic acid, azodicarbonamide and chlorine dioxide (a gas treatment used only occasionally at the end of flour milling). Ascorbic acid, which is vitamin C, is the preferred improver, it is the only improver allowed in many countries, including all of the EC. However, it has characteristics which are difficult to deal with in some breadmaking circumstances. During mixing air is incorporated into the dough, and the oxygen in the air converts the ascorbic acid to dehydroascorbic acid, which is the true oxidising improver. Industrial bakers now have breadmaking problems which are caused by insufficient improvement from ascorbic acid. Though azodicarbonamide is an alternative to ascorbic acid, it is generally less acceptable to consumers and more difficult to control in the bakery because of its rapid and powerful improver action. Some bakers choose not to use azodicarbonamide. Improver chlorine dioxide is very weak, cannot be applied at the bakery and could not, on its own, provide all the improver function required.

The consequences of sub-optimal oxidising improver action are lower loaf volume, increased firmness of the whole loaf and slice (interpreted by consumers as staleness), duller crumb colour and less acceptable eating quality. The extent of the problem is widespread within the UK and will affect breadmaking in all countries using rapid processes with ascorbic acid as the only improver. It is of particular importance where loaf crumb structure is required to be uniform.

In modern breadmaking processes mixing is much more than the homogenous incorporation of the recipe ingredients into a dough. During dough mixing there are three essential factors which must occur simultaneously, as follows:
1. There must be mechanical energy expended at an intensity which is sufficient to develop gluten derived from both the natural protein in flour and from any dried gluten added to raise the flour performance. A high speed, highly powered mixing machine is required with the ability to impart an energy level of about 11Wh/kg of dough. To be effective the intensity of mixing must impart the required work input in a total mixing time not exceeding about 4 minutes. This mixing machinery is commonly available and used to produce about 80% of all bread made in the UK. Similar machines are in use in about 30 countries.
2. During mixing air must be mixed into dough to create bubble nuclei and to provide oxygen which is essential for the conversation of ascorbic acid to dehydroascorbic acid (the true oxidising improver). The oxidising improver gives stability to gluten development. The mixing action is required to both beat air in and subdivide it into a uniform structure of very small cells. Oxygen from the air in the dough bubbles is quickly removed by yeast in the recipe, which leaves nitrogen gas to nucleate the structure. The nitrogen bubbles in dough are expanded as carbon dioxide produced by yeast fermentation diffuses into them. When the expanded structure is set during baking it becomes the crumb structure of the loaf.
3. The correct subdivision of air in dough during mixing, required to produce a uniform loaf structure acceptable for most breads, is essential but difficult to achieve. It is substantially more successful when a partial vacuum is applied during mixing. This produces bubbles of smaller diameter which have greater stability during subsequent machining. The application of a partial vacuum removes air which in turn decreases oxidation from ascorbic acid and adversely affects oxidising improvement required for dough development and bubble structure stability.

Restricting air incorporation during mixing, by applying a partial vacuum, did not matter when bromate and ascorbic acid could be used together. It is a problem when ascorbic acid is on its own. Bakers now have loaf volume and structure problems caused by insufficient oxidation from the improver. Bakers try to cover-up these loaf problems by the use of more expensive higher protein flour, adding emulsifier, increasing enzyme addition and sometimes by taking all three of these measures. However, these measures do not provide a satisfactory solution to the problem.

It is known that improver action from ascorbic acid can be increased by delaying the application of partial vacuum until about the second half of mixing. That means mixing at atmospheric pressure for about 2 minutes and pulling partial vacuum for the remainder of the time until the required work input has been achieved, approximately a further 2 minutes in a large size machine. Structure control is not quite as good as when there is partial vacuum throughout mixing, but oxidising improver action is better, though less than optimum.

European Patent Application No 0 246 768 describes a method and apparatus for mixing bread dough in an oxygen-enriched atmosphere to encourage the action of ascorbic acid as the sole improver. It suggests that the application of a partial vacuum is not needed at all, but that it may be performed immediately prior to the addition of oxygen or oxygen-enriched air.

The present invention provides a solution to the problem outlined above by the application of a pressure/vacuum sequence to provide adequate air in the atmosphere during the first phase for ascorbic acid conversation to dehydroascorbic acid, followed by rapid application of partial vacuum for bubble structure control.

The invention thus provides a dough mixing method for use in breadmaking, which comprises mixing together dough ingredients, including ascorbic acid as an improver, in the presence of air or an oxygen-containing gas, the mixing providing sufficient mechanical energy for a sufficient time to develop the gluten in the dough, characterised in that excess pressure is applied to the atmosphere around the dough during a first phase of the mixing, and then a reduced pressure is applied during a second phase.

The invention enables better improvement from ascorbic acid, resulting in maximum performance of flour properties, and control of bubble structure. Further exploitation of partial vacuum, which under these combined conditions could be used at lower pressure to further improve dough machining and handling properties, may be possible.

A preferred method of mixing is to operate the mixing elements in opposite directions during the pressure and vacuum stages. During the pressure stage, mixing action should beat air into the dough structure by having a wide face to the mixing element moving into the dough. During the vacuum stage the leading edges of the mixing element have a cutting action to subdivide and open large bubbles for air removal by vacuum.

The invention can also be used with other gases and combinations of oxygen and air to provide higher oxygen concentration in the mixing machine headspace, already known to be successful at atmospheric pressure.

Reference is now made to the accompanying drawings, in which:
Figure 1 is a diagrammatic representation of one embodiment of apparatus for use in the present invention; and
Figure 2 is a diagrammatic representation of another embodiment of apparatus for use in the invention.

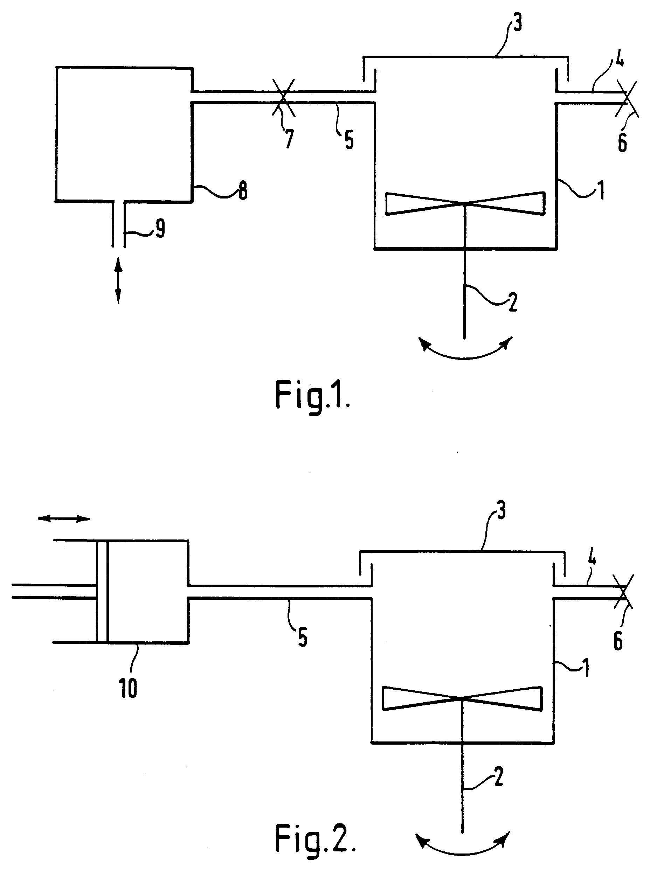

Figure 1 shows a mixer bowl 1 provided with a reversible beater drive 2. The bowl is provided with a lid 3 which can be opened for the entry and removal of mixing ingredients. In the closed position, the lid is sealed to the rim of the bowl so that the bowl then becomes a pressure/vacuum-tight container. The bowl 1 is provided with first and second pipelines 4 and 5 respectively. The first pipeline 4 is provided with an adjustable pressure relief valve 6 which is adapted to release pressure from the bowl if it rises above a safe limit. The pipeline 5 is provided with a valve 7 and communicates between the interior of the bowl 1 and a pressure/vacuum tank 8. The tank 8 is in turn provided with a pressure/vacuum supply 9.

In use, the dough ingredients are placed in the bowl 1 and the lid 3 is sealed. The tank 8 has previously been placed under pressure, and the valve 7 is opened to increase the pressure in the bowl 1. The valve 7 is then closed, and the dough ingredients are mixed in the bowl 1 by the beater. In the meanwhile, the tank 8 is evacuated. After a suitable time interval, while mixing in the bowl 1 is continued, excess pressure is released through the valve 6. The valve 6 is then closed and the valve 7 is opened to reduce the pressure in the bowl 1. The valve 7 is closed and the tank 8 is returned to atmospheric pressure. After completion of mixing, the valve 7 is opened to return the interior of the bowl 1 to atmospheric pressure. The lid 3 is opened and the mixed dough is removed.

When the pressure in the bowl 1 is changed from excess pressure to reduced pressure, the direction of rotation of the beater drive 2 is reversed. The blades of the beater have thick edges on one side and narrow cutting edges on the opposite side. During the excess pressure phase, the thick edges are the leading edges. During the reduced pressure phase, the thin edges are the leading edges.

The apparatus shown in Figure 2 is generally similar in construction and operation to that of Figure 1, and corresponding members have the same reference numerals. However, in Figure 2, a pressure/vacuum tank is not employed, and instead the pipeline 5 communicates directly with a vacuum/pressure device 10 which is capable of increasing pressure or pulling a vacuum directly to the interior of the mixer bowl 1.

The invention is further illustrated by the following example of breadmaking by the Chorleywood Bread process (CBP) adapted according to the present invention.

### EXAMPLE

- Breadmaking process:: CBP
- Bread type:: 800g, white, four-piece, lidded, long-loaf.
- Mixing machine:: High-speed.

| Recipe: | % of flour weight |
|---|---|
| Flour | 100 |
| Yeast | 2.5 |
| Salt | 2.0 |
| Water | 62.0 |
| Fat | 1.0 |
| Improver | 1.0 |

### Dough processing:

- Mixing machine:: High-speed
- Work input:: Up to 11 Wh/kg

### First stage of mixing

- Pressure:: Up to 3 Bar, typically 1.5 to 2.0 Bar
- Mixing element:: Direction for beating in air preferred

### Second stage of mixing

- Pressure:: Partial vacuum, typically 0.5 to 0.25 Bar
- Mixing element:: Direction to cut through dough preferred
- Dough temperature:: 30.5 +/- 1°C
- Scaling:: 850 to 930g
- First moulding:: Into a Ball by Conical moulder
- First proof:: 2 to 6 min at ambient temperature
- Final:: Four-piece
- Pan size:: Approx Top 250mm x 122mm, 125mm deep
- Shape:: Lidded
- Proving conditions:: About 43°C, humidity to prevent skinning
- Proving height:: About 2cm below pan lip
- Baking temperature:: Average 240 to 250°C
- Oven type:: Various
- Baking time:: 18 to 30 min
- Baking humidity:: Steam injected as required
- Cooling:: )As appropriate for the variety
- Storage:: )

## Claims

1. A dough mixing method for use in breadmaking, which comprises mixing together dough ingredients, including ascorbic acid as an improver, in the presence of air or an oxygen-containing gas, the mixing providing sufficient mechanical energy for a sufficient time to develop the gluten in the dough, characterised in that excess pressure is applied to the atmosphere around the dough during a first phase of the mixing, and then a reduced pressure is applied during a second phase.

2. A method according to claim 1, in which the total energy provided by the mixing is from 5 to 20 Wh/kg of dough over a total mixing time of from 1 to 6 minutes.

3. A method according to claim 1 or 2, in which the first and second phase of mixing each last for 1 to 3 minutes.

4. A method according to any of claims 1 to 3, in which the pressure applied during the first phase is in the range of from 1.05 Bar to 3.0 Bar.

5. A method according to any of claims 1 to 4, in which the pressure applied during the second phase is in the range of from 0.5 Bar to 0.25 Bar.

6. A method according to any of claims 1 to 5, in which ascorbic acid is the sole oxidising improver in the dough and the mixing is carried out in the presence of air.

## Patentansprüche

1. Teigmischverfahren für die Anwendung bei der Brotherstellung, umfassend das Durchmischen der Teig-Bestandteile, mit Askorbinsäure als Verbesserer in Anwesenheit von Luft oder einem Sauerstoff enthaltenden Gas, wobei das Mischen genügend mechanische Energie während einer genügend großen Zeitspanne aufbringt, um im Teig Klebereiweiß zu erzeugen,
dadurch gekennzeichnet, daß auf die Atmosphäre rund um den Teig während einer ersten Phase des Mischens Überschußdruck aufgebracht, und sodann während einer zweiten Phase ein reduzierter Druck aufgebracht wird.

2. Verfahren nach Anspruch 1, wobei die durch das Mischen insgesamt aufgebrachte Energie zwischen 5 und 20 Wh/kg Teig während einer gesamten Mischdauer von 1 bis 6 min aufgebracht wird.

3. Verfahren nach Anspruch 1 oder 2, wobei die erste und die zweite Phase des Mischens jeweils 1 bis 3 min betragen.

4. Verfahren nach einem der Ansprüche 1 bis 3, wobei der während der ersten Phase aufgebrachte Druck im Bereich von 1,05 bis 3,0 bar beträgt.

5. Verfahren nach einem der Ansprüche 1 bis 4, wobei der während der zweiten Phase aufgebrachte Druck im Bereich von 0,5 bis 0,25 bar liegt.

6. Verfahren nach einem der Ansprüche 1 bis 5, wobei die Askorbinsäure der einzige oxidierende Verbesserer im Teig ist, und wobei das Mischen in Anwesenheit von Luft durchgeführt wird.

## Revendications

1. Procédé de malaxage de pâte pour la fabrication de pain, qui comprend le malaxage ensemble des ingrédients de la pâte, y compris de l'acide ascorbique utilisé comme améliorant, en présence d'air ou d'un gaz contenant de l'oxygène, le malaxage fournissant une énergie mécanique suffisante pendant un temps suffisant pour engendrer le gluten dans la pâte, ***caractérisé en ce qu'***une surpression est appliquée à l'atmosphère entourant la pâte pendant une première phase du malaxage, et qu'une pression réduite est appliquée pendant une seconde phase.

2. Procédé selon la Revendication 1, dans lequel l'énergie totale fournie par le malaxage est de 5 à 20 Wh/kg de pâte pour un temps de malaxage total allant de 1 à 6 minutes.

3. Procédé selon la Revendication 1 ou 2, dans lequel la première et la second phases de malaxage durent chacune de 1 à 3 minutes.

4. Procédé selon l'une quelconque des Revendications 1 à 3, dans lequel la pression appliquée pendant la première phase est comprise entre 1,05 Bar et 3,0 Bar.

5. Procédé selon l'une quelconque des Revendications 1 à 4, dans lequel la pression appliquée pendant la seconde phase est comprise entre 0,5 Bar et 0,25 Bar.

6. Procédé selon l'une quelconque des Revendications 1 à 5, dans lequel l'acide ascorbique est l'unique améliorant d'oxydation dans la pâte et le malaxage est réalisé en présence d'air.
